# EUROPÄISCHE PATENTANMELDUNG

(11) **EP 4 421 458 A1**
(43) Veröffentlichungstag der Anmeldung: **28.08.2024**
(21) Anmeldenummer: 24153290.2
(22) Anmeldetag: 22.01.2024
(51) Int. Cl.: G01F 23/16, B60K 15/06, G01F 23/80, B60K 15/03

(54) **TANKSYSTEM**

(30) Priorität: 27.02.2023 DE 102023104694
(71) Anmelder: Deere & Company, Moline, IL 61265 (US)
(72) Erfinder: THIRUMALAI, SATHISH, 68163 Mannheim (DE); JOSHI, VINAYAK, 68163 Mannheim (DE); SATAVALEKAR, DEVIDAS D, 68163 Mannheim (DE); MISHRA, SAURABH, 68163 Mannheim (DE)
(74) Vertreter: Dehnhardt, Florian Christopher

(57) **Zusammenfassung**

Die Erfindung betrifft ein Tanksystem (10) mit einem Tankbehälter (12) zur Befüllung mit einem Kraftstoff und mit einer Sensoranordnung (14) zur Ermittlung einer aktuellen Kraftstoffmenge in dem Tankbehälter (12). Die Sensoranordnung (14) weist einen Drucksensor (18) und einen innerhalb des Tankbehälters (12) angeordneten Luftkanal (20) auf. Der Luftkanal (20) ist mit einem ersten Kanalende (26) an den Drucksensor (18) pneumatisch angeschlossen und mit einem dem ersten Kanalende (26) gegenüberliegenden offenen zweiten Kanalende (28) in Richtung eines Behälterbodens (30) des Tankbehälters (12) ausgerichtet.

## Beschreibung

Die Erfindung betrifft ein Tanksystem mit einem Tankbehälter zur Befüllung mit einem Kraftstoff und mit einer Sensoranordnung zur Ermittlung einer aktuellen Kraftstoffmenge in dem Tankbehälter.

Derartige Tanksysteme dienen dazu, über geeignete Sensoren die Kraftstoffmenge in dem Tankbehälter eines Fahrzeugs zu ermitteln. Von den Sensoren generierte Sensorsignale werden in verarbeiteter Form an einer Anzeigeeinheit des Fahrzeugs dargestellt, um dem Fahrer oder Nutzer die aktuelle Kraftstoffmenge bzw. den aktuellen Füllstand im Tankbehälter anzuzeigen.

Der vorliegenden Erfindung liegt die Aufgabe zugrunde, die Genauigkeit bei der Ermittlung der aktuellen Kraftstoffmenge im Tankbehälter zu verbessern.

Diese Aufgabe wird durch ein Tanksystem mit den Merkmalen des Patentanspruchs 1 gelöst.

Weitere vorteilhafte Ausgestaltungen des erfindungsgemäßen Tanksystems gehen aus den Unteransprüchen hervor.

Gemäß Patentanspruch 1 weist das Tanksystem einen Tankbehälter zur Befüllung mit einem Kraftstoff auf. Des Weiteren weist das Tanksystem eine Sensoranordnung zur Ermittlung einer aktuellen Kraftstoffmenge in dem Tankbehälter auf. Die Sensoranordnung enthält einen Drucksensor. Außerdem verfügt die Sensoranordnung über einen zumindest teilweise und insbesondere vollständig innerhalb des Tankbehälters angeordneten Luftkanal. Der Luftkanal ist mit einem ersten Kanalende an den Drucksensor pneumatisch angeschlossen. Mit einem dem ersten Kanalende gegenüberliegenden offenen zweiten Kanalende ist der Luftkanal in Richtung eines Behälterbodens des Tankbehälters ausgerichtet.

Der Luftkanal ist vorzugsweise als eine Art Luftsäule, Luftröhre oder Kapillarsäule ausgebildet. Der Luftkanal kann biegsam oder starr sein.

Die zumindest teilweise Anordnung des Luftkanals in dem Tankbehälter erzeugt abhängig von der Füllhöhe bzw. Niveau der Kraftstoffmenge unterschiedliche Luftdrücke in dem Luftkanal. Hierdurch kann ein physikalisch einfacher und besonders genauer Zusammenhang zwischen dem Niveau der Kraftstoffmenge und Sensorsignalen der Sensoranordnung bereitgestellt werden. Hierzu trägt auch das offene zweite Kanalende bei, welches eine permanente pneumatische und fluidische Verbindung zwischen dem Luftkanal und dem Behälterinnenraum bewirkt. Dies ermöglicht eine zu jedem Zeitpunkt des Fahrzeugbetriebs besonders genaue Ermittlung und Anzeige der aktuellen Kraftstoffmenge.

Der physikalische Zusammenhang zwischen dem Luftdruck des Luftkanals und Sensorsignalen der Sensoranordnung ermöglicht insbesondere eine lineare oder proportionale Detektion der Füllhöhe bzw. des Füllstandes des Kraftstoffes von einer besonders hohen Füllhöhe bis zu einer besonders niedrigen Füllhöhe, was die möglichst genaue Ermittlung und Anzeige der aktuellen Kraftstoffmenge technisch erleichtert.

Das Prinzip dieses Tanksystems ist auch besonders geeignet für eine genaue Ermittlung der aktuellen Kraftstoffmenge bei einem oder mehreren kombinierten Tankbehältern, die unregelmäßige Konturen des Innenvolumens aufweisen.

Das Tanksystem ist in unterschiedlichen Fahrzeugkategorien einsetzbar. Eine effiziente Unterstützung bietet das Tanksystem bei Nutzfahrzeugen, insbesondere bei landwirtschaftlichen Nutzfahrzeugen (z.B. einem Traktor), Baumaschinen und Forstmaschinen.

Die verfahrensgemäß verbesserte Ermittlung der aktuellen Kraftstoffmenge unterstützt die Beteiligten (z.B. Fahrer, Nutzer, Eigentümer, Händler, Flottenmanager) bei der Nutzung von Füllstands-Daten, z.B. für die präzise Planung und Durchführung spezifischer Verbrauchsstrategien.

Vorzugsweise ist das offene zweite Kanalende Bestandteil eines unteren Kanalabschnittes des Luftkanals, welcher relativ zu einem oberen Kanalabschnitt seitlich versetzt in Richtung des Behälterbodens verläuft. Diese Geometrie des Luftkanals kann die Messgenauigkeit bei der Ermittlung der aktuellen Kraftstoffmenge insbesondere bei niedrigen Füllständen unterstützen. Der seitliche Versatz kann z.B. durch einen relativ zum oberen Kanalabschnitt abgewinkelt oder abgebogen verlaufenden unteren Kanalabschnitt realisiert sein.

In einer bevorzugten Ausführungsform erstreckt sich der Luftkanal in Richtung des Behälterbodens derart, dass das offene zweite Kanalende des Luftkanals den Behälterboden berührt bzw. mechanisch kontaktiert. Hierdurch können besonders niedrige Füllstände messtechnisch erfasst werden und die Anzeigegenauigkeit bei relativ geringen Kraftstoffmengen im Tankbehälter weiter verbessern.

Der Drucksensor ist vorzugsweise an einer Außenseite des Tankbehälters angeordnet. Hierdurch erübrigt sich der herkömmliche Aufwand für eine Festlegung der technisch günstigsten Position eines Sensors innerhalb des Tankbehälters. Außerdem können spezifische Messungenauigkeiten einfacher vermieden werden.

In einer bevorzugten Ausführungsform ist das erste Kanalende des Luftkanals über eine Kopplungsvorrichtung an den Drucksensor pneumatisch angeschlossen. Somit wirkt die Kopplungsvorrichtung zwischen dem Drucksensor und dem Luftkanal als ein geeigneter pneumatisch-mechanischer Adapter, welcher die Positionierung und den Anbau der Sensoranordnung am Tankbehälter besonders montagefreundlich gestaltet.

Eine besonders zuverlässige und präzise Arbeitsweise des Drucksensors ist dann gegeben, wenn er eine Membran enthält, welche gegen den im Luftkanal vorhandenen Druck beweglich ist bzw. ausgelenkt wird. Auf diese Weise stehen die Membranbewegungen in einem direkten und somit physikalisch zuverlässigen Zusammenhang zu jeder Änderung des Füllstandes. Insbesondere ist dieser Zusammenhang linear oder proportional.

Vorzugsweise ist die Membran mit einem elektrischen Schaltkreis gekoppelt derart, dass der Schaltkreis von einer Membranbewegung abhängige elektrische Signale generiert. Hierdurch kann der Drucksensor geeignete elektrische Ausgangssignale liefern, welche die Ermittlung des aktuellen Füllstandes bzw. der aktuellen Kraftstoffmenge technisch einfach macht. Beispielsweise handelt es sich bei den Ausgangssignalen um eine elektrische Spannung, deren Werte in Abhängigkeit von dem sich verändernden Füllstand sinken oder steigen. Insbesondere sind die elektrischen Spannungssignale proportional zu dem Füllstand bzw. der Kraftstoffmenge.

Zur Unterstützung einer einfachen Montage der Sensoranordnung an dem Tankbehälter ist der Luftkanal vorzugsweise an einer Montagebasis fixiert, welche zum Schließen einer Behälteröffnung des Tankbehälters ausgebildet ist. Hierdurch kann der Luftkanal montagetechnisch einfach durch die Behälteröffnung hindurch innerhalb des Tankbehälters positioniert werden. Insbesondere ist beim Schließen der Behälteröffnung durch die Montagebasis der Luftkanal automatisch in der erforderlichen Position angeordnet.

Beispielsweise ist die Montagebasis raumsparend nach Art einer Platte oder eines Deckels ausgebildet. Insbesondere ist die Behälteröffnung an einer Stelle des Tankbehälters oberhalb des maximalen Füllstandes angeordnet.

In einer bevorzugten Ausführungsform ist die Montagebasis durch Befestigungsmittel mit dem Tankbehälter fest verbunden und sorgt für einen sicheren Verschluss der Behälteröffnung. Vorzugsweise sind die Befestigungsmittel (z.B. Schrauben) für eine lösbare Befestigung ausgebildet, so dass etwaige Wartungs- und Reparaturarbeiten an dem Tanksystem mit geringem Montageaufwand möglich sind.

Die Dichtheit des Tankbehälters im Bereich seiner Behälteröffnung ist besonders wirksam gewährleistet, wenn Dichtungsmittel verwendet werden, welche vorzugsweise an der der Behälteröffnung zugewandten Seite der Montagebasis angeordnet sind. Hierdurch können die Dichtungsmittel während der Befestigung der Montagebasis automatisch zwischen der Montagebasis und dem Rand der Behälteröffnung klemmfixiert werden, was eine stabile Dichtungswirkung unterstützt.

In einer weiteren bevorzugten Ausführungsform ist die Kopplungsvorrichtung an der der Behälteröffnung abgewandten Seite der Montagebasis angeordnet. Dies ermöglicht eine komfortable Handhabung der gesamten Sensoranordnung bei Montage-, Wartungs- und Reparaturarbeiten.

Vorzugsweise ist die Sensoranordnung bzw. der Drucksensor mit einer Datenverarbeitungseinheit (z.B. als Bestandteil einer Steuereinheit) zur Auswertung von elektrischen Signalen der Sensoranordnung verbunden. In Abhängigkeit von dieser Auswertung kann die aktuelle Kraftstoffmenge in dem Tankbehälter ermittelt werden.

Insbesondere wird die ermittelte aktuelle Kraftstoffmenge an einer geeigneten Anzeigeeinheit signalisiert oder als Füllstands-Daten zur Ableitung fahrzeugbezogener Entscheidungen oder Maßnahmen weiterverarbeitet.

Vorzugsweise erfolgt die Ermittlung der aktuellen Kraftstoffmenge in Abhängigkeit von einem erfassten Füllstand bzw. einer erfassten Füllhöhe des Kraftstoffes im Tankbehälter. Vorteilhaft werden hierbei elektrische Signale der Sensoranordnung ausgewertet, welche die Füllhöhe des Kraftstoffes repräsentieren.

Bei den elektrischen Signalen der Sensoranordnung handelt es sich insbesondere um Ausgangssignale (z.B. eine elektrische Spannung) des Drucksensors.

Für eine möglichst genaue Ermittlung der Kraftstoffmenge wird die Füllhöhe vorzugsweise mit bereitgestellten Kenndaten des Tankbehälters verknüpft, so dass die aktuelle Kraftstoffmenge in Abhängigkeit von der Füllhöhe und den Kenndaten ermittelt wird. Hierdurch können unterschiedliche spezifische Behälterprofile von Tankbehältern berücksichtigt werden, bei denen trotz gleicher Füllhöhe unterschiedliche Kraftstoffmengen vorhanden sind.

Insbesondere sind die tankbehälterspezifischen Kenndaten in einer Datenverarbeitungseinheit abgespeichert und für die Ermittlung der aktuellen Kraftstoffmenge wieder abrufbar. Die Kenndaten sind beispielsweise tankbehälterspezifische Tabellenwerte oder Kennlinien.

In einer bevorzugten Ausführungsform repräsentieren die Kenndaten ein Verhältnis zwischen der Füllhöhe und einem entsprechenden Volumen im Kraftstoffbehälter. Mit diesen Kenndaten lässt sich die Kraftstoffmenge tankbehälterspezifisch besonders genau ermitteln. Gleichzeitig bleibt der Rechenaufwand für entsprechende Algorithmen gering.

Im Fahrbetrieb (z.B. Beschleunigung oder Abbremsen) können Bewegungen des Kraftstoffes im Tankbehälter die Ermittlung der aktuellen Kraftstoffmenge ungenauer machen. Beispielsweise kann die momentane Füllhöhe des Kraftstoffes im Tankbehälter zu einem bestimmten Zeitpunkt von der tatsächlichen Füllhöhe bei gleichmäßiger Fahrt oder im Stillstand abweichen.

Vorzugsweise wird deshalb zu unterschiedlichen Zeitpunkten (insbesondere während des Fahrbetriebs) die jeweilige momentane Kraftstoffmenge ermittelt. Danach wird aus den ermittelten momentanen Kraftstoffmengen ein Mittelwert gebildet, welcher die aktuelle Kraftstoffmenge repräsentiert. Auf diese Weise können Ungenauigkeiten bei der Ermittlung der aktuellen Kraftstoffmenge insbesondere während des Fahrbetriebs wirksam ausgemittelt und dadurch verringert werden.

Der Mittelwert kann als ein arithmetischer Durchschnittswert für einen bestimmten Zeitraum aus mehreren momentanen Kraftstoffmengen berechnet werden. Alternativ kann der Mittelwert mathematisch anders als das arithmetische Mittel definiert werden.

Um die Information bzw. Daten bezüglich der aktuellen Kraftstoffmenge für die Datennutzer (z.B. Fahrer, Flottenmanagement) noch stabiler zu gestalten, ist es vorzugsweise vorgesehen, den vorgenannten ermittelten Mittelwert solange als gültige aktuelle Kraftstoffmenge beizubehalten (z.B. für eine Signalisierung an einer Anzeigeeinheit), bis ein neuer Mittelwert gebildet wird, welcher den bisherigen Mittelwert ersetzt. Das Ersetzen erfordert vorzugsweise eine vordefinierte Abweichung zwischen dem bisherigen und dem neuen Mittelwert und kann beispielsweise durch einen Algorithmus entsprechend gesteuert werden.

Das erfindungsgemäße Tanksystem wird im Folgenden anhand der beigefügten Zeichnungen näher erläutert. Dabei sind hinsichtlich ihrer Funktion übereinstimmende bzw. vergleichbare Bauteile mit denselben Bezugszeichen gekennzeichnet. Es zeigen:
- Fig. 1: eine perspektivische Schnittdarstellung eines Tankbehälters des erfindungsgemäßen Tanksystems mit einer Sensoranordnung,
- Fig. 2: eine vergrößerte Seitenansicht der Sensoranordnung gemäß Fig.1,
- Fig. 3: eine vergrößerte Darstellung des Details III gemäß Fig. 2,
- Fig. 4: eine vergrößerte Draufsicht eines Drucksensors,
- Fig. 5: eine schematische Seitenansicht des Tanksystems mit angedeuteten unterschiedlichen Kraftstoffmengen,
- Fig. 6: eine schematische Darstellung von Einzelheiten des verwendeten Drucksensors,
- Fig. 7: eine Kennlinie mit einem Verhältnis zwischen einer Füllhöhe und einem Volumen im Tankbehälter, und
- Fig. 8: ein Diagramm mit der aktuellen Kraftstoffmenge als ein Mittelwert aus mehreren momentanen Kraftstoffmengen.

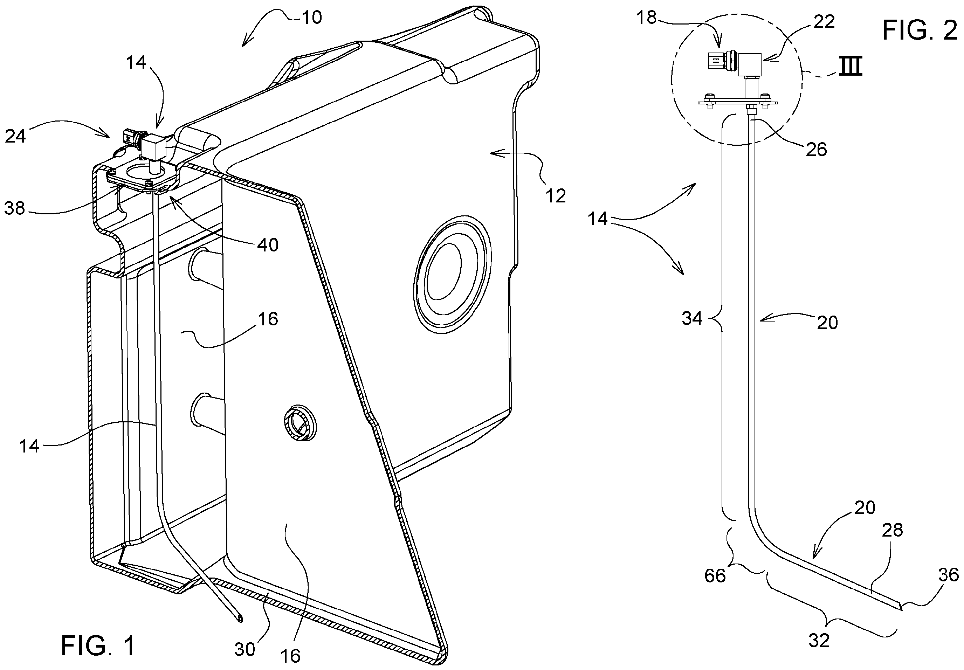

Fig. 1 zeigt ein Tanksystem 10 mit einem Tankbehälter 12 und einer daran angeordneten Sensoranordnung 14. Der Tankbehälter 12 ist geschnitten dargestellt mit Blick auf einen mit Kraftstoff befüllbaren Behälterinnenraum 16. Die Sensoranordnung 14 dient der Ermittlung einer aktuellen Kraftstoffmenge in dem Tankbehälter 12.

Fig. 2 zeigt die Sensoranordnung 14 in einem vergrößertem Maßstab. Sie weist einen Drucksensor 18 und eine Luftsäule bzw. einen Luftkanal 20 auf. Der Drucksensor 18 und der Luftkanal 20 sind über eine Kopplungsvorrichtung 22 miteinander pneumatisch verbunden.

In Fig. 1 ist erkennbar, dass der Drucksensor 18 außerhalb des Tankbehälters 12 an einer Außenseite 24 angeordnet ist.

Der Luftkanal 20 ist in dem Behälterinnenraum 16 angeordnet. Dabei ist der Luftkanal 20 mit einem ersten axialen Kanalende 26 über die Kopplungsvorrichtung 22 an den Drucksensor 14 pneumatisch angeschlossen. Ein dem ersten Kanalende 26 axial gegenüberliegendes offenes zweites Kanalende 28 des Luftkanals 20 ist zu einem Behälterboden 30 des Tankbehälters 12 hin ausgerichtet. Die Ausrichtung ist insbesondere derart, dass das geöffnete zweite Kanalende 28 den Behälterboden 30 berührt. Dabei ist das zweite Kanalende 28 Bestandteil eines unteren Kanalabschnittes 32 des Luftkanals 20, welcher relativ zu einem senkrecht verlaufenden oberen Kanalabschnitt 34 seitlich versetzt in Richtung des Behälterbodens 30 verläuft. Hierbei ist der untere Kanalabschnitt 32 relativ zum oberen Kanalabschnitt 34 abgewinkelt angeordnet. Beide Kanalabschnitte 32, 34 sind durch einen dazwischen angeordneten, gebogen verlaufenden Zwischenabschnitt 66 miteinander verbunden.

Die abgewinkelte Anordnung des unteren Kanalabschnittes 32 und eine abgeschrägte Öffnung 36 am zweiten Kanalende 28 erleichtern ein Eindringen des Kraftstoffes in den Luftkanal 20 und unterstützen die Messgenauigkeit bei der Ermittlung der aktuellen Kraftstoffmenge.

Für eine einfache Montage der Sensoranordnung 14 an dem Tankbehälter 12 ist eine plattenartige Montagebasis 38 vorgesehen. Die Montagebasis 38 dient dem Verschließen einer Behälteröffnung 40 des Tankbehälters 12. Die Sensoranordnung 14 ist mit der Montagebasis 38 fest und insbesondere lösbar verbunden, so dass die Sensoranordnung 14 automatisch in der gewünschten Weise am und im Tankbehälter 12 positioniert ist, sobald die Montagebasis 38 am Tankbehälter 12 befestigt worden ist.

Im Ausführungsbeispiel wird die Montagebasis 38 mittels vier Schrauben 42, welche jeweils an einer Ecke der plattenartigen Montagebasis 38 angeordnet sind, mit dem Tankbehälter 12 fest verbunden. Bei dieser Befestigung wird eine Dichtung 44 zwischen der Montagebasis 38 und einem Rand der Behälteröffnung 40 eingeklemmt. Die Dichtung 44 ist an der der Behälteröffnung 40 zugewandten Seite der Montagebasis 38 angeordnet und bewirkt einen nach außen abgedichteten Behälterinnenraum 16. Hierzu ist die Dichtung 44 an die Geometrie der Behälteröffnung 40 angepasst ausgebildet, z.B. ring-, rahmen- oder scheibenartig.

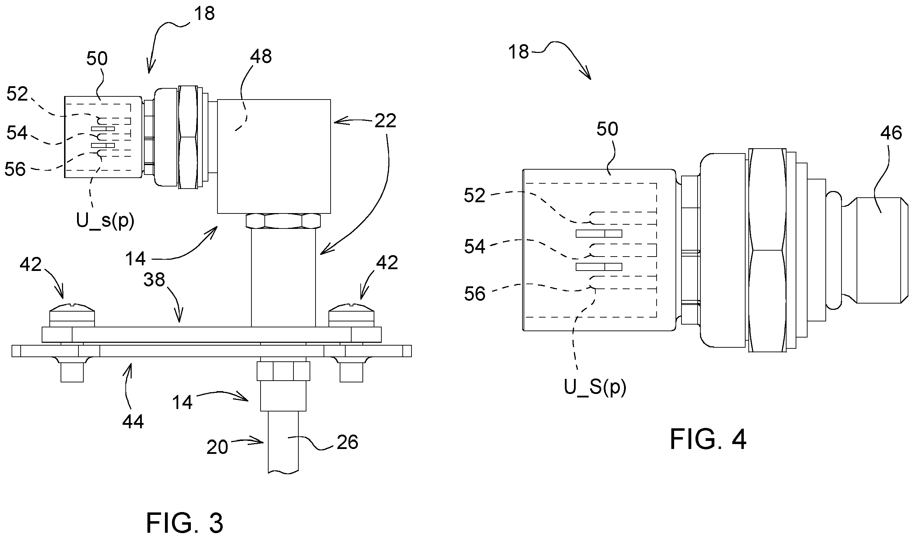

Fig. 4 zeigt einen Drucksensor 18 mit einem axial äußeren Kopplungsabschnitt 46, welcher an eine Anschlussbuchse 48 der Kopplungsvorrichtung 22 pneumatisch angeschlossen wird. Hierdurch sind der Drucksensor 14 und die Kopplungsvorrichtung 22 miteinander lösbar gekoppelt. Auf diese Weise ist auch eine pneumatische Verbindung zwischen dem Drucksensor 14 und dem ersten Kanalende 26 des Luftkanals 20 hergestellt.

Dem Kopplungsabschnitt 46 axial gegenüberliegend weist der Drucksensor 14 einen Anschlussabschnitt 50 auf. Letzterer kann elektrische Anschlüsse enthalten, z.B. einen Spannungsanschluss 52, einen Masseanschluss 54 und einen Signalanschluss 56. Ein hierfür vorgesehenes Anschlusskabel kann an den Anschlussabschnitt 50 angeschlossen werden für eine Spannungsversorgung des Drucksensors 18 und für ein Abgreifen von Ausgangssignalen U_s an dem Signalanschluss 56.

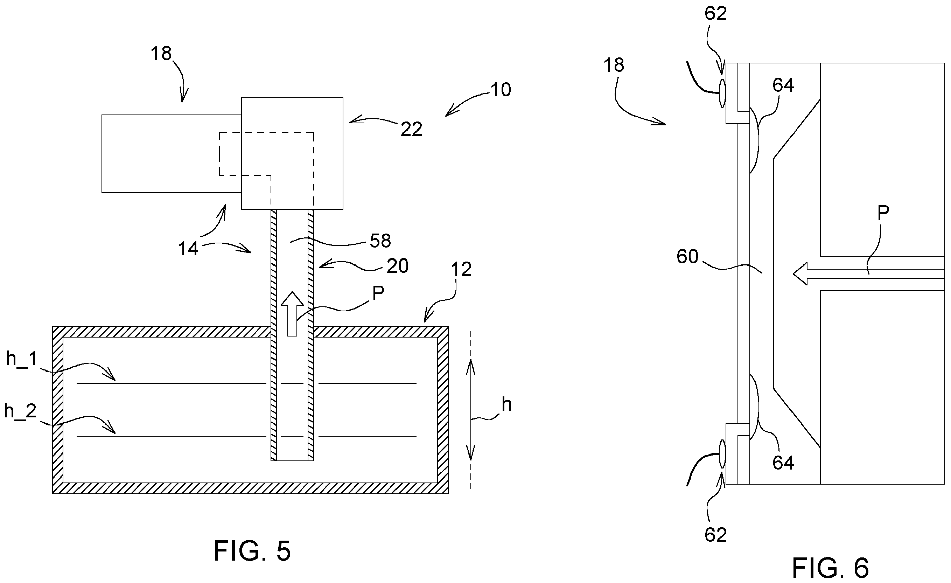

In Fig. 5 ist das Funktionsprinzip der Sensoranordnung 14 erkennbar. Bei einer Füllhöhe h_1 des Kraftstoffes ist die Luftsäule 58 innerhalb des Luftkanals 20 kürzer als bei einer niedrigeren Füllhöhe h_2 des Kraftstoffes. Dementsprechend variiert ein Druck p gegen den Drucksensor 18 in Abhängigkeit von der Füllhöhe h.

Der variierende Druck p wird dazu genutzt, eine im Drucksensor 14 enthaltene Membran 60 zu beaufschlagen (Fig. 6). Die Membran 60 ist derart mit einem elektrischen bzw. elektronischen Schaltkreis 62 gekoppelt, dass ihre druckbedingten Membranbewegungen einen oder mehrere elektrische Widerstände 64 und/oder andere elektrische Widerstände des Schaltkreises 62 verändern. Hierdurch können an dem Signalanschluss 56 Ausgangssignale U_s gemessen werden mit Signalwerten in Abhängigkeit von dem Druck p und folglich in Abhängigkeit von der Füllhöhe h. Insbesondere besteht ein linearer oder proportionaler Zusammenhang zwischen dem Ausgangssignal U_s und dem Druck p bzw. der Füllhöhe h.

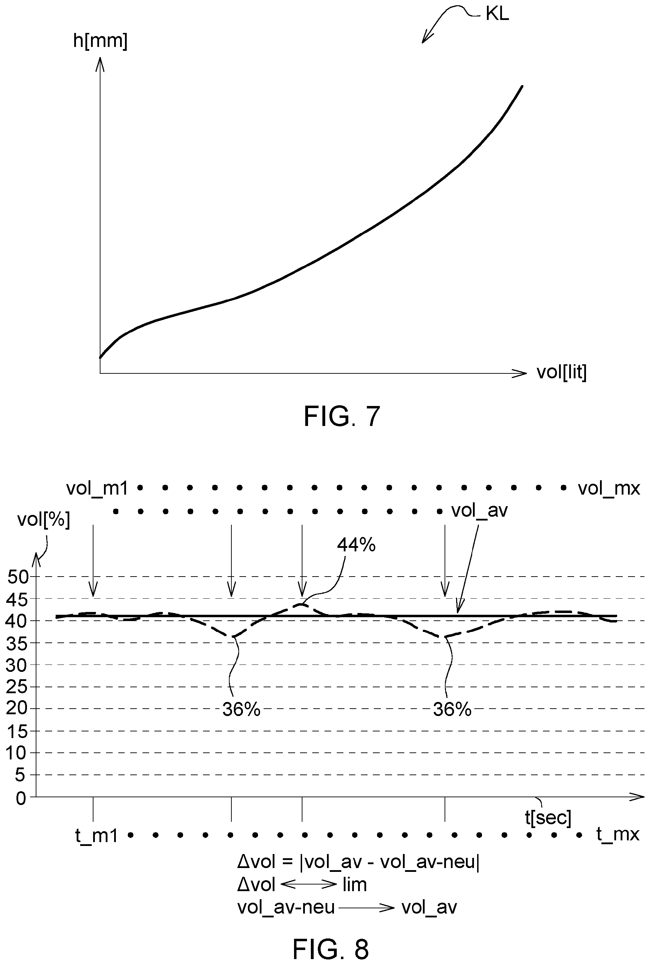

Somit repräsentieren die Ausgangssignale U_s des Drucksensors 14 die Füllhöhe h. Aufgrund unterschiedlicher geometrischer Ausgestaltungen des Tankbehälters 12 können gleiche Füllhöhen h allerdings unterschiedliche Kraftstoffmengen bedeuten. Zur Ermittlung der tatsächlichen aktuellen Kraftstoffmenge wird deshalb eine für den jeweiligen Tankbehälter 12 generierte spezifische Kennlinie KL bereitgestellt, die ein Verhältnis zwischen der Füllhöhe h (z.B. in mm) und dem Volumen vol (z.B. in Liter) des Behälterinnenraumes 16 bis zu dieser Füllhöhe h repräsentiert (Fig. 7).

Fig. 8 zeigt eine Maßnahme zur Ausmittelung der aktuellen Kraftstoffmenge vol_av über einen bestimmten Zeitraum hinweg, so dass momentane Schwankungen der ermittelten Kraftstoffmenge aufgrund bestimmter Fahrsituationen (z.B. Abbremsen, Beschleunigen) bei der Ermittlung der tatsächlichen aktuellen Kraftstoffmenge berücksichtigt werden. Hierbei werden mittels der oben beschriebenen Sensoranordnung 14 zunächst zu unterschiedlichen Zeitpunkten t_m1 bis t_mx die jeweiligen momentanen Kraftstoffmengen vol_m1 bis vol_mx ermittelt.

In dem Beispiel gemäß Fig. 8 sind die Kraftstoffmengen in % dargestellt, wobei 100% der maximalen Füllhöhe h bzw. einem vollgetankten Tankbehälter 12 entspricht.

Beispielsweise beträgt in dem Diagramm gemäß Fig. 8 an zwei unterschiedlichen Zeitpunkten t_mx die momentane Kraftstoffmenge vol_mx jeweils 36% und zu einem anderen dazwischenliegenden Zeitpunkt t_mx etwa 44%. Aus der Vielzahl ermittelter momentaner Kraftstoffmengen vol_mx wird der Mittelwert vol_av der aktuellen Kraftstoffmenge gebildet, welcher in Fig. 8 etwa 41% beträgt. Damit kann dem Anwender oder Fahrer eine stabile aktuelle Kraftstoffmenge ohne momentane Schwankungen angezeigt werden.

Eine geänderte aktuelle Kraftstoffmenge wird beispielsweise erst dann angezeigt, wenn bei wiederholter Ermittlung der aktuellen Kraftstoffmenge ein neuer Mittelwert vol_av-neu gebildet wird und der Absolutwert der Differenz zwischen dem bisherigen Mittelwert vol_av und dem neuen Mittelwert vol_av-neu einen vordefinierten Grenzwert lim überschreitet. Dann kann der neue Mittelwert vol_av-neu den bisherigen Mittelwert vol_av ersetzen.

## Patentansprüche

1. Tanksystem (10) mit einem Tankbehälter (12) zur Befüllung mit einem Kraftstoff und mit einer Sensoranordnung (14) zur Ermittlung einer aktuellen Kraftstoffmenge (vol) in dem Tankbehälter (12), wobei
- die Sensoranordnung (14) einen Drucksensor (18) aufweist,
- die Sensoranordnung (14) einen zumindest teilweise innerhalb des Tankbehälters (12) angeordneten Luftkanal (20) aufweist, welcher mit einem ersten Kanalende (26) an den Drucksensor (18) pneumatisch angeschlossen ist, und
- der Luftkanal (20) mit einem dem ersten Kanalende (26) gegenüberliegenden und offenen zweiten Kanalende (28) in Richtung eines Behälterbodens (30) des Tankbehälters (12) ausgerichtet ist.

2. Tanksystem nach Anspruch 1, **dadurch gekennzeichnet, dass** das zweite Kanalende (28) des Luftkanals (20) Bestandteil eines unteren Kanalabschnittes (32) des Luftkanals 20 ist, welcher relativ zu einem oberen Kanalabschnitt (34) seitlich versetzt in Richtung des Behälterbodens (30) verläuft.

3. Tanksystem nach einem der vorhergehenden Ansprüche, **dadurch gekennzeichnet, dass** der Drucksensor (18) an einer Außenseite (24) des Tankbehälters (12) angeordnet ist.

4. Tanksystem nach einem der vorhergehenden Ansprüche, **dadurch gekennzeichnet, dass** das erste Kanalende (26) des Luftkanals (20) mittels einer Kopplungsvorrichtung (22) an den Drucksensor (18) pneumatisch angeschlossen ist.

5. Tanksystem nach einem der vorhergehenden Ansprüche, **dadurch gekennzeichnet, dass** der Drucksensor (18) eine gegen den im Luftkanal (20) vorhandenen Druck (p) bewegliche Membran (60) enthält.

6. Tanksystem nach Anspruch 5, **dadurch gekennzeichnet, dass** die Membran (60) mit einem elektrischen Schaltkreis (62, 64) des Drucksensors (18) gekoppelt ist derart, dass der Schaltkreis (62, 64) von einer Bewegung der Membran (60) abhängige elektrische Signale (U_s) generiert.

7. Tanksystem nach einem der vorhergehenden Ansprüche, **dadurch gekennzeichnet, dass** der Luftkanal (20) an einer Montagebasis (38) fixiert ist, welche zum Schlie-ßen einer Behälteröffnung (40) des Tankbehälters (12) ausgebildet ist.

8. Tanksystem nach Anspruch 7, **dadurch gekennzeichnet, dass** die Montagebasis (38) durch Befestigungsmittel (42) mit dem Tankbehälter (12) fest verbunden ist.

9. Tanksystem nach Anspruch 7 oder 8, **dadurch gekennzeichnet, dass** die Montagebasis (38) an ihrer der Behälteröffnung (40) zugewandten Seite Dichtungsmittel (44) aufweist.

10. Tanksystem nach einem der Ansprüche 4 bis 9, **dadurch gekennzeichnet, dass** die Kopplungsvorrichtung (22) an der der Behälteröffnung (40) abgewandten Seite der Montagebasis (38) angeordnet ist.

11. Tanksystem nach einem der vorhergehenden Ansprüche, **dadurch gekennzeichnet, dass** die Ermittlung der aktuellen Kraftstoffmenge (vol) in Abhängigkeit von einer Füllhöhe (h) des Kraftstoffes im Tankbehälter (12) erfolgt.

12. Tanksystem nach Anspruch 11, **dadurch gekennzeichnet, dass** elektrische Signale (U_s) der Sensoranordnung (14, 18) die Füllhöhe (h) des Kraftstoffes repräsentieren.

13. Tanksystem nach einem der vorhergehenden Ansprüche, **dadurch gekennzeichnet, dass** vom Tankbehälter (12) abhängige Kenndaten (KL) bereitgestellt sind zur Ermittlung der aktuellen Kraftstoffmenge (vol) in Abhängigkeit von der Füllhöhe (h) und den Kenndaten (KL).

14. Tanksystem nach einem der vorhergehenden Ansprüche, **dadurch gekennzeichnet, dass** die aktuelle Kraftstoffmenge als ein Mittelwert (vol_av) gebildet ist aus zu unterschiedlichen Zeitpunkten (t_mx) ermittelten momentanen Kraftstoffmengen (vol_mx).

15. Tanksystem nach Anspruch 14, **dadurch gekennzeichnet, dass** der bisherige Mittelwert (vol_av) solange gültig ist, bis ein neuer Mittelwert (vol_av-neu) gebildet ist zum Ersetzen des bisherigen Mittelwertes (vol_av).
